# EUROPEAN PATENT APPLICATION

(11) **EP 4 428 047 A1**
(43) Date of publication of application: **11.09.2024**
(21) Application number: 22889631.2
(22) Date of filing: 04.08.2022
(51) Int. Cl.: B65D 1/00, B65D 65/40

(54) **MULTILAYER CONTAINER, METHOD FOR PRODUCING CONTAINER, AND METHOD FOR PRODUCING REGENERATED POLYESTER RESIN**

(30) Priority: 04.11.2021 JP 2021180359
(71) Applicant: MITSUBISHI GAS CHEMICAL COMPANY, INC., Chiyoda-ku Tokyo 100-8324 (JP)
(72) Inventor: MIYABE, Takanori, Hiratsuka-shi, Kanagawa 254-0016 (JP); SHIMADA NAKAMURA, Jin, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2022/029973
(87) International publication number: WO 2023/079806

(57) **Abstract**

Provided are a multilayer container which includes a polyester resin layer and a polyamide resin layer. The polyester resin layer contains a polyester resin and has a total light transmittance of 80% or more, and the polyamide resin layer contains a polyamide resin in a proportion of 10 mass% or more of the polyamide resin layer and has a total light transmittance of less than 80%.

## Description

### Technical Field

The present invention relates to a multilayer container, a method for producing the container, and a method for producing a recycled polyester resin.

### Background Art

Polyester resins represented by a polymer obtained by using an aromatic dicarboxylic acid compound and an aliphatic diol compound as monomers such as polyethylene terephthalate (PET) exhibit merits such as transparency, mechanical performance, melt stability, solvent resistance, fragrance retention, gas barrier properties, and recyclability. Therefore, polyester resins are widely used in various packaging materials such as films, sheets, and hollow containers. Polyester resins have high gas barrier properties, but their gas barrier properties are not necessarily sufficient for applications requiring an even higher level of gas barrier properties for gases such as oxygen and carbon dioxide. Therefore, as a means to improve the gas barrier properties of polyester resins, a means to vapor deposit aluminum oxide or silicon oxide onto a molded body or packaging container made from a polyester resin, a means to apply and laminate or melt and mix a resin having higher gas barrier performance than a polyester resin onto a molded body or packaging container made from a polyester resin are exemplified. Examples of the resin having higher gas barrier properties than a polyester resin include an ethylene-vinyl alcohol copolymer resin. Examples of the gas barrier resins other than the ethylene-vinyl alcohol copolymer include polyamide resins such as nylon 6 and nylon 66.

On the other hand, the above multilayer container containing a white pigment or the like is also known (Patent Document 1). The multilayer container containing such a pigment is used not only for the purpose of imparting design properties but also for the purpose of having a light shielding function.

### Citation List

### Patent Documents

Patent Document 1: JP 2011-183663 A

### Summary of Invention

### Technical Problem

Here, there is a demand for a multilayer container having the above light-shielding property, but there may be an issue in recyclability. For example, in a multilayer container having a polyester resin layer and a gas barrier layer, a colorant or a light-shielding agent is generally added to the polyester resin layer for the purpose of shielding light. However, in the multilayer container in which the colorant or the light-shielding agent is added to the polyester resin layer, the polyester resin layer is colored when the multilayer container is recycled. That is, it is difficult to recycle the polyester resin recycled from such a polyester resin layer into a transparent container.

In addition, in the multilayer container having the polyester resin layer and the gas barrier layer, in order to recycle the polyester resin, easy peeling of the polyester resin layer and the gas barrier layer, namely recyclability, is required.

The present invention is to solve such issues, and an object of the present invention is to provide a multilayer container having excellent light-shielding properties and excellent recyclability, a method for producing the container using a polyester resin collected from the multilayer container, and a method for producing a recycled polyester resin.

### Solution to Problem

As a result of studies conducted by the inventors of the present invention based on the above issues, it has been found that employing a polyamide resin layer which can be easily peeled off from a polyester resin layer as a gas barrier layer and imparting the polyamide resin layer with a light-shielding function can provide a gas-barrier multilayer container that has a light-shielding function and is capable of recycling a polyester resin can be obtained, thereby completing the present invention.

Specifically, the issues described above are solved by the following solutions.
<1> A multilayer container including a polyester resin layer and a polyamide resin layer, wherein the polyester resin layer comprises a polyester resin and has a total light transmittance of 80% or more, and the polyamide resin layer comprises a polyamide resin in a proportion of 10% by mass or more of the polyamide resin layer and has a total light transmittance of less than 80%.
<2> The multilayer container according to <1>, in which the polyamide resin layer contains at least one of a colorant and a light-shielding agent.
<3> The multilayer container according to <2>, in which the at least one of a colorant and a light-shielding agent is at least one of titanium oxide and carbon black.
<4> The multilayer container according to any one of <1> to <3>, in which the polyamide resin contains a diamine-derived structural unit and a dicarboxylic acid-derived structural unit, 70% by mole or more of the diamine-derived structural unit being a structural unit derived from xylylenediamine, and 70% by mole or more of the dicarboxylic acid-derived structural unit being a structural unit derived from an α,ω-linear aliphatic dicarboxylic acid having from 4 to 20 carbons.
<5> The multilayer container according to any one of <1> to <4>, in which the polyamide resin layer contains a polyamide resin in a proportion of 50% by mass or more of the polyamide resin layer.
<6> The multilayer container according to any one of <1> to <5>, in which a total light transmittance of the polyamide resin layer is 70% or less.
<7> The multilayer container according to any one of <1> to <6>, in which the multilayer container has an oxygen transmission rate of 0.040 cc/(bottle·day·0.21 atm) or less.
<8> The multilayer container according to any one of <1> to <7>, in which a total light transmittance of the polyester resin layer is 90% or more.
<9> The multilayer container according to any one of <1> to <8>, in which the polyamide resin layer includes an oxygen absorber.
<10> The multilayer container according to any one of <1> to <9>, in which the multilayer container has a recycling property.
<11> A method for producing a container, the method including collecting a polyester resin from the multilayer container according to any one of <1> to <10>, and producing a container by using the collected polyester resin, the container having a polyester resin layer, the polyester resin layer containing a polyester resin and having a total light transmittance of 80% or more.
<12> A method for producing a recycled polyester resin, the method including collecting a polyester resin from the multilayer container according to any one of <1> to <10>.
<13> The method for producing a recycled polyester resin according to <12>, in which the method includes removing all or a part of the polyamide resin layer from the multilayer container and collecting the polyester resin.
<14> The method for producing a recycled polyester resin according to <13>, in which the polyamide resin layer is removed by air elutriation after the multilayer container has been ground.
<15> The method for producing a recycled polyester resin according to any one of <12> to <14>, in which the collected polyester resin is subjected to at least one of crystallization and solid-phase polymerization.

### Advantageous Effects of Invention

According to the present invention, it has become possible to provide a multilayer container having excellent light-shielding properties and excellent recyclability, a method for producing a container using a polyester resin collected from the multilayer container, and a method for producing a recycled polyester resin.

### Brief Description of Drawings

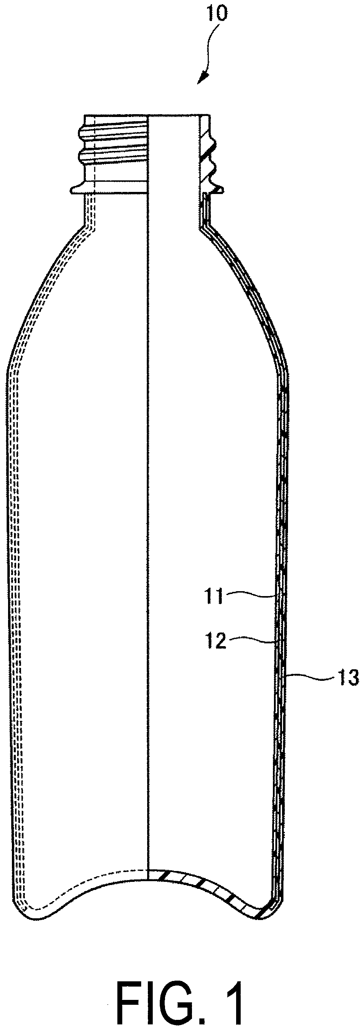

FIG. 1 is a schematic view illustrating an example of a multilayer container.

### Description of Embodiments

Hereinafter, embodiments for conducting the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23 °C unless otherwise noted.

Note that, each step herein includes not only an independent step, but also a case in which the desired action of a step is achieved, though the step cannot be clearly differentiated from another step.

When a measurement method or the like of a standard set forth in the present specification differs depending on the year, it is based on the standard at the time of the filing unless otherwise stated.

A multilayer container of the present embodiments includes a polyester resin layer and a polyamide resin layer, in which the polyester resin layer contains a polyester resin and has a total light transmittance of 80% or more, and the polyamide resin layer contains a polyamide resin at a ratio of 10% by mass or more of the polyamide resin layer and has a total light transmittance of less than 80%.

Through such a configuration, a multilayer container having an excellent light-shielding property and recyclability can be obtained. Furthermore, it is possible to provide a multilayer container having excellent moldability (blow properties), mold fouling suppression (surface floating of the colorant), glossiness, and oxygen barrier properties.

That is, in a light-shielding container using a polyester resin such as a PET bottle having a light-shielding property, a colorant/light-shielding agent is mainly added to a polyester resin layer. However, when the colorant/light-shielding agent is added to the polyester resin layer, the polyester resin itself is colored, so that recycling into a transparent container is difficult. Further, there is also an issue that mold fouling occurs at the time of bottle molding.

In the present embodiments, a polyester resin layer and a polyamide resin layer (for example, a gas barrier layer) that can be easily peeled off from the polyester resin layer are used, and the polyamide resin layer is provided with a light shielding function. Thus, a multilayer container having a light shielding function and capable of recycling the polyester resin is obtained.

### <Multilayered Container>

The multilayer container of the present embodiments has a polyester resin layer and a polyamide resin layer. Such a multilayer structure can impart higher gas barrier properties to the container using the polyester resin. An example of the polyamide resin layer is a layer functioning as a barrier layer against oxygen and light.

FIG. 1 is a schematic view illustrating an example of the multilayer container of the present embodiments, in which 10 denotes a multilayer container, 11 denotes an inner layer, 12 denotes a gas barrier layer, and 13 denotes an outer layer. Usually, the inner layer 11 and the outer layer 13 are polyester resin layers, and the gas barrier layer 12 is a polyamide resin layer. In the multilayer container of the present embodiments, the polyester resin layers of the inner layer 11 and the outer layer 13 may have the same composition or may have different compositions. In the present embodiments, at least one (preferably both) of the polyester resin layers serving as the inner layer 11 and/or the outer layer 13 is preferably in contact with the polyamide resin layer serving as the gas barrier layer 12. A multilayer container having a more excellent peeling property is obtained by adopting such a configuration. The gas barrier layer 12 may be composed of only one layer or two or more layers. Similarly, the inner layer 11 and the outer layer 13 may be composed of only one layer or two or more layers. The multilayer container of the present embodiments may have a layer other than the inner layer 11, the gas barrier layer 12, and the outer layer 13. Examples of the other layer(s) include an adhesive layer and a design layer.

In the present embodiments, the multilayer container preferably has a multilayer structure selected from a two-layer structure of "polyester resin layer/polyamide resin layer", a three-layer structure of "polyester resin layer/polyamide resin layer/polyester resin layer", and a five-layer structure of "polyester resin layer/polyamide resin layer/polyester resin layer/polyamide resin layer/polyester resin layer", and more preferably has a three-layer structure of "polyester resin layer/polyamide resin layer/polyester resin layer". In particular, it is preferable that the polyester resin layer and the polyamide resin layer are in contact with each other with no other layer interposed therebetween.

The multilayer container of the present embodiments is generally a hollow container, and the trunk section thereof has at least a multilayer structure. A ratio (thickness ratio W/S) of a thickness (W) of the polyester resin layer to a thickness (S) of the polyamide resin layer of the trunk section is preferably 1 or more and 200 or less. Note that the thickness of the polyester resin layer refers to the average thickness, and when a plurality of polyester resin layers are present in the trunk section, the thicknesses of the plurality of layers are averaged, and the average thickness per layer is determined. The same applies to the thickness of the polyamide resin layer. The thickness ratio W/S is preferably 1 or more because the polyamide resin layer is easily separated from the polyester resin layer when the recycled polyester resin is obtained. In addition, the thickness ratio W/S of 200 or less is preferable because the gas barrier performance of the hollow container is easily ensured, and the storage performance of the content is improved. The above thickness ratio (W/S) is preferably 50% or less, more preferably 15% or less, even more preferably 10% or less, even still more preferably 5% or less.

The overall thickness at the trunk section of the multilayer container (i.e., overall thickness of all layers at the trunk section) is preferably 50 µm or more, 100 µm or more, more preferably from 150 µm or more, even more preferably 200 um or more, and still even more preferably 300 µm or more. The total thickness of the trunk section of the multilayer container is 5 mm or less, more preferably 3 mm or less, even more preferably 2 mm or less, and may be 500 µm or less, 450 µm or less, or 400 µm or less.

The thickness (W) of the polyester resin layer in the trunk section of the multilayer container is preferably 50 um or more, more preferably 75 um or more, and still more preferably 100 µm or more. The thickness (W) of the polyester resin layer is preferably 2mm or less, more preferably 1mm or less, and even more preferably 500 µm or less. When the multilayer container of the present embodiments has two or more polyester resin layers, the thickness of each polyester resin layer may the same or different.

The thickness (S) of the polyamide resin layer in the trunk section of the multilayer container is preferably 1 µm or more, more preferably 3 µm or more, and still more preferably 10 µm or more. When the value is set to the lower limit value or more, the gas barrier properties and light-shielding properties tend to be further improved. The thickness (S) of the polyamide resin layer is preferably 200 µm or less, more preferably 150 µm or less, and still more preferably 100 µm or less. When the value is set to the upper limit value or less, separation/segregation at the time of recycling tends to be further improved.

As one example of the multilayer container of the present embodiments, the position of the polyamide layer from the inner surface of the container (the position of the interface between the polyester layer of the innermost layer and the polyamide layer) is preferably 5 µm or more, more preferably 10 µm or more, even more preferably 15 um or more, and still even more preferably 20 µm or more, or preferably 300 um or less, more preferably 200 µm or less, even more preferably 180 µm or less, and still even more preferably 150 µm or less. By setting the position of the polyamide layer to be within the range described above, the oxygen barrier properties are improved.

The volume of the multilayer container is not particularly limited, but from the viewpoints of the oxygen barrier properties and producing, the volume of the multilayer container is preferably 30 mL or more, more preferably 50 mL or more, even more preferably 100 mL or more, still even more preferably 200 mL or more, and yet still even more preferably 250 mL or more, or the volume of the multilayer container is preferably 3000 mL or less, more preferably 2000 mL or less, even more preferably 1500 mL or less, still even more preferably 1000 mL or less, and yet still even more preferably 600 mL or less.

The multilayer container of the present embodiments are preferably excellent in oxygen barrier properties.

Specifically, the multilayer container of the present embodiments preferably has an oxygen transmission rate of 0.040 cc/(bottle-day-0.21 atm) or less. The oxygen transmission rate is preferably 0.020 cc/(bottle·day·0.21 atm) or less, more preferably 0.015 cc/(bottle-day-0.21 atm) or less, and still more preferably 0.008 cc/bottle-day-0.21 atm) or less. The oxygen transmission rate is achieved, for example, by using a polyamide resin having excellent oxygen barrier properties for the polyamide resin layer. The lower limit is not particularly fixed but is preferably 0.001 cc/(bottle-day-0.21 atm) or more. When the multilayer container is a bottle, the oxygen transmission rate of the multilayer container is measured as a value for the trunk section of the bottle. The oxygen transmission rate is measured according to the descriptions of Examples which will be given later.

The total light transmittance of the multilayer container (trunk section) of the present embodiments is preferably 70% or less, more preferably 55% or less, even more preferably 40% or less, still even more preferably 20% or less, and yet still even more preferably 14% or less. The lower limit of the total light transmittance is ideally 0%, but the required performance is satisfied even when the lower limit of the total light transmittance is, for example, 1% or more, or further 5% or more. The total light transmittance is measured in accordance with the Examples which will be described later. Such a total light transmittance is achieved by, for example, blending a colorant and/or a light-shielding agent, which will be described in detail later, into the polyamide resin layer.

### <Polyester Resin>

The multilayer container of the present embodiments includes a polyester resin layer. The polyester resin layer includes a polyester resin and has a total light transmittance of 80% or more. When the total light transmittance is 80% or more, the polyester resin layer becomes transparent, and when the polyester resin is recycled, it can be easily recycled into a container having a transparent polyester resin layer.

In the present embodiments, the total light transmittance of the polyester resin layer is preferably 85% or more, more preferably 87% or more, still more preferably 89% or more, and even more preferably 90% or more. The upper limit of the total light transmittance is ideally 100%, but practically 910 or less. The total light transmittance is measured in accordance with the Examples which will be described later.

Such a total light transmittance is achieved by making the polyester resin layer substantially free of excessive additives, particularly, a colorant and/or a light-shielding agent. The "substantially free of a colorant and/or a light-shielding agent" means that the content of the colorant and/or the light-shielding agent is less than 100 ppm by mass of the polyester resin layer, and the content of the colorant and/or the light-shielding agent is preferably less than 50 ppm by mass, more preferably less than 10 ppm by mass, even more preferably less than 1 ppm by mass, and still more preferably less than 0.1 ppm by mass.

The polyester resin contained in the polyester layer is preferably a polycondensation polymer of a dicarboxylic acid and a diol, and preferably includes a structural unit derived from a dicarboxylic acid (hereinafter, also referred to as a "dicarboxylic acid unit") and a structural unit derived from a diol (hereinafter, also referred to as a "diol unit").

Examples of dicarboxylic acid units include structural units derived from aromatic dicarboxylic acids, structural units derived from alicyclic dicarboxylic acids, and structural units derived from aliphatic dicarboxylic acids, and structural units derived from aromatic dicarboxylic acids are preferred.

Examples of aromatic dicarboxylic acids include terephthalic acid, isophthalic acid, orthophthalic acid, biphenyl dicarboxylic acid, diphenyl ether dicarboxylic acid, diphenylsulfone dicarboxylic acid, diphenylketone dicarboxylic acid, 2,6-naphthalene dicarboxylic acid, 1,4-naphthalene dicarboxylic acid, and 2,7-naphthalene dicarboxylic acid. From perspectives of cost and production ease, terephthalic acid, isophthalic acid, orthophthalic acid, naphthalene dicarboxylic acid, and 4,4'-biphenyl dicarboxylic acid are preferable, and terephthalic acid, isophthalic acid, and naphthalene dicarboxylic acid are more preferable, and from the perspective of moldability, terephthalic acid and isophthalic acid are further preferable, and terephthalic acid is even more preferable.

Note that as the aromatic dicarboxylic acid, an alkyl ester of an aromatic dicarboxylic acid having 1 to 4 carbons may be used.

When the multilayer container of the present embodiments is to be recycled, the multilayer container may be melt-kneaded with a typical monolayer container made of a polyester resin. Since the multilayer container of the present embodiments includes a unit derived from terephthalic acid as a dicarboxylic acid unit, miscibility of the multilayer container with a known monolayer container is favorable, and good recyclability is obtained.

As the aromatic dicarboxylic acid, a sulfophthalic acid and a metal sulfophthalate may be used. For the details of sulfophthalic acid and metal sulfophthalates, reference can be made to the contents of paragraph [0018] of WO 2017/057463, the contents of which are incorporated herein by reference.

Examples of the alicyclic dicarboxylic acid include cyclohexane dicarboxylic acid, norbornene dicarboxylic acid, and tricyclodecane dicarboxylic acid.

Examples of the aliphatic dicarboxylic acid include malonic acid, succinic acid, adipic acid, azelaic acid, and sebacic acid.

Examples of the diol unit include structural units derived from aliphatic diols, structural units derived from alicyclic diols, and structural units derived from aromatic diols, and structural units derived from aliphatic diols are preferable.

Examples of the aliphatic diols include ethylene glycol, 2-butene-1,4-diol, trimethylene glycol, tetramethylene glycol, hexamethylene glycol, neopentyl glycol, methylpentanediol, and diethylene glycol. Among these, ethylene glycol is preferable, and ethylene glycol is more preferable.

Examples of the alicyclic diols include cyclohexane dimethanol, isosorbide, spiroglycol, 2,2,4,4-tetramethyl-1,3-cyclobutanediol, norbornene dimethanol and tricyclodecane dimethanol.

Examples of aromatic diols include bisphenol compounds and hydroquinone compounds.

Regarding the polyester resin used in the present embodiments, it is preferable that 50% by mole or more of a structural unit derived from dicarboxylic acid (dicarboxylic acid unit) be a structural unit derived from an aromatic dicarboxylic acid and 50% by mole or more of a structural unit derived from diol (diol unit) be derived from aliphatic diol, it is more preferable that 50% by mole or more of the dicarboxylic acid unit be a structural unit derived from terephthalic acid and 50% by mole or more of the diol unit be a structural unit derived from ethylene glycol, it is still more preferable that 80% by mole or more of the dicarboxylic acid unit be a structural unit derived from terephthalic acid and 80% by mole or more of the diol unit is a structural unit derived from ethylene glycol, and it is still even more preferable that 90% by mole or more of the dicarboxylic acid unit be a structural unit derived from terephthalic acid and 90% by mole or more of the diol unit is a structural unit derived from ethylene glycol.

Note that in the following description, a polyester resin in which 50% by mole or more of the dicarboxylic acid unit is a structural unit derived from terephthalic acid, and 50% by mole or more of the diol unit is a structural unit derived from ethylene glycol is also referred to as polyethylene terephthalate.

When the proportion of the units derived from terephthalic acid is set to 50% by mole or more of all dicarboxylic acid units as described above, the polyester resin is less likely to be amorphous, and therefore, the multilayer container is less prone to thermal shrinkage, for example, when the interior is filled with a high temperature material, and the multilayer container exhibits good heat resistance.

When the polyester resin uses polyethylene terephthalate, the polyester resin may be constituted of polyethylene terephthalate alone, or may contain a polyester resin other than polyethylene terephthalate in addition to the polyethylene terephthalate. The polyethylene terephthalate is preferably contained at an amount of from 80 to 100 mass%, and more preferably from 90 to 100 mass%, relative to the total amount of the polyester resin.

Preferred aspects where the polyester resin is polyethylene terephthalate are described below. The polyethylene terephthalate may be one containing a structural unit derived from a bifunctional compound other than terephthalic acid and ethylene glycol, and examples of the bifunctional compound include the aforementioned aromatic dicarboxylic acids and aliphatic diols other than terephthalic acid and ethylene glycol, as well as bifunctional compounds other than aromatic dicarboxylic acids and aliphatic diols. Here, the structural unit derived from the bifunctional compound other than terephthalic acid and ethylene glycol accounts for preferably 20 mol% or less, and more preferably 10 mol% or less relative to the total moles of all structural units constituting the polyester resin.

Note that, even in the case where the polyester resin is a polyester resin other than polyethylene terephthalate, the polyester resin may be one containing a structural unit derived from a bifunctional compound other than aromatic dicarboxylic acids and aliphatic diols. For the details of the bifunctional compound other than aromatic aliphatic diols and dicarboxylic acids, reference can be made to the descriptions in paragraphs [0022] and [0023] of WO 2017/057463, the contents of which are incorporated herein by reference.

The polyester resin may include a structural unit derived from a monofunctional compound such as a monocarboxylic acid and a monoalcohol. For these details, reference can be made to the descriptions in paragraph [0024] of WO 2017/057463, the contents of which are incorporated herein by reference.

Furthermore, in order to obtain necessary physical properties, the polyester resin may contain, as a copolymerization component, a polyfunctional compound having at least three groups selected from carboxyl groups, hydroxy groups, and ester-forming groups thereof. For these details, reference can be made to the descriptions in paragraph [0025] of WO 2017/057463, the contents of which are incorporated herein by reference.

As for the method of producing polyester resin, reference can be made to the descriptions in paragraph [0026] of WO 2017/057463, the contents of which are incorporated herein by reference.

The intrinsic viscosity of the polyester resin is not particularly limited, but is preferably from 0.5 to 2.0 dL/gm and more preferably from 0.6 to 1.5 dL/g. The molecular weight of the polyester resin is sufficiently high when the intrinsic viscosity is greater than or equal to 0.5 dL/g, and therefore the multilayered container can exhibit the mechanical properties necessary as a structure.

Note that the intrinsic viscosity is measured by dissolving the polyester resin in a mixed solvent of phenol/1,1,2,2-tetrachloroethane (= 6/4 mass ratio) to prepare 0.2, 0.4, and 0.6 g/dL solutions, and then measuring the intrinsic viscosity at 25°C using an automatic viscosity measuring apparatus (Viscotek, available from Malvern Instruments Limited).

The content of the polyester resin (preferably polybutylene terephthalate resin) in the polyester resin layer is preferably more than 90% by mass of the resin layer, more preferably 95% by mass or more, and still more preferably 98% by mass or more. The content may be 99% by mass or more. The upper limit of the content may be 100% by mass.

The polyester resin layer in the present embodiments may contain one type only or two or more types of the polyester resins. When two or more kinds are contained, the total amount thereof is preferably in the above range.

The polyester resin layer may contain a component other than the polyester resin. Examples of the other components include resins other than the polyester resin, thermal stabilizers, photostabilizers, moisture-proof agents, waterproofing agents, lubricants, and spreading agents.

### <Polyamide Resin>

The polyamide resin layer in the present embodiments contains a polyamide resin at a ratio of 10% by mass or more of the polyamide resin layer, and has a total light transmittance of less than 80%. When the polyamide resin is contained in an amount of 10% by mass or more, the gas barrier properties of the polyamide resin layer can be further improved. When the total light transmittance is less than 80%, a multilayer container having light-shielding properties can be obtained.

The total light transmittance of the polyamide resin layer of the present embodiments is preferably 70% or less, more preferably 55% or less, even more preferably 40% or less, still even more preferably 20% or less, and yet still even more preferably 14% or less. The lower limit of the total light transmittance is ideally 0%, but the required performance is satisfied even when the lower limit of the total light transmittance is 5% or more. The total light transmittance is measured in accordance with the Examples which will be described later. Such a total light transmittance is achieved by, for example, blending a colorant and/or a light-shielding agent, which will be described in detail later.

In addition, the difference between the total light transmittance of the polyester resin layer and the total light transmittance of the polyamide resin layer in the embodiments is preferably 10% or more, more preferably 20% or more, still more preferably 30% or more, even still more preferably 40% or more, yet even still more preferably 50% or more, yet even still more preferably 60% or more. When the content is not less than the lower limit, the effects of the present invention tend to be more effectively exhibited. The upper limit of the difference in light transmittance is not particularly determined, but 90% or less is practical.

The polyamide resin used in the present embodiments may be an aliphatic polyamide resin or a semi-aromatic polyamide resin, or may be a mixture of an aliphatic polyamide resin and a semi-aromatic polyamide resin, and preferably includes at least a semi-aromatic polyamide resin. In addition, for the polyamide resin, reference can be made to the disclosures in paragraphs [0011] to [0013] of JP 2011-132550 A.

Examples of the aliphatic polyamide resin include polyamide 6 and polyamide 66, and polyamide 66 is preferable.

The polyamide resin used in the present embodiments preferably includes a semi-aromatic polyamide resin. For example, 80% by mass or more (preferably 85 to 95% by mass) of the polyamide resin contained in the resin composition of the present embodiments is preferably a semi-aromatic polyamide resin. Here, the semi-aromatic polyamide resin refers to a polyamide resin including a diamine-derived structural unit and a dicarboxylic acid-derived structural unit, in which from 20 to 80% by mass of the total structural unit of the diamine-derived structural unit and the dicarboxylic acid-derived structural unit is a structural unit containing an aromatic ring. By using such a semi-aromatic polyamide resin, the mechanical strength of the resulting multilayer container can be increased. Examples of the semi-aromatic polyamide resin include terephthalic acid-based polyamide resins (polyamide 6T, polyamide 9T, polyamide 10T), terephthalic acid and isophthalic acid-based polyamide resins (polyamide 6T/6I, polyamide 9T/9I, polyamide 10T/10I), and xylylenediamine-based polyamide resins that will be described later. The xylylenediamine-based polyamide resins are preferable.

In the present embodiments, preferably, the polyamide resin contains a diamine-derived structural unit and a dicarboxylic acid-derived structural unit, 70% by mole or more of the diamine-derived structural unit is a structural unit derived from xylylenediamine, and 70% by mole or more of the dicarboxylic acid-derived structural unit is a structural unit derived from an α,ω-linear aliphatic dicarboxylic acid having from 4 to 20 carbons. Hereinafter, such a polyamide resin is sometimes referred to as xylylenediamine-based polyamide resin. By using the xylylenediamine polyamide resin, a multilayer container having more excellent gas barrier properties can be obtained, easy peeling of the polyester resin layer can be achieved, and the recyclability tends to be improved.

In the xylylenediamine-based polyamide resin, more preferably 75% by mole or more, still more preferably 80% by mole or more, even more preferably 85% by mole or more, even still more preferably 90% by mole or more, and yet even still more preferably 95% by mole or more of the diamine-derived structural unit is derived from m-xylylenediamine and p-xylylenediamine.

In the present embodiments, a ratio between m-xylylenediamine and p-xylylenediamine is preferably 0 to 90% by mole of p-xylylenediamine relative to 10 to 100% by mole of m-xylylenediamine, more preferably 0 to 70% by mole of p-xylylenediamine relative to 30 to 100% by mole of m-xylylenediamine, still more preferably 0 to 30% by mole of p-xylylenediamine relative to 70 to 100% by mole of m-xylylenediamine, even still more preferably 0 to 10% by mole of p-xylylenediamine relative to 90 to 100% by mole of m-xylylenediamine, and yet even still more preferably 0 to 2% by mole of p-xylylenediamine relative to 98 to 100% by mole of m-xylylenediamine. When the value is set to the above range, the oxygen barrier properties tend to be further improved.

Examples of the diamine that can be used as a raw material diamine component of the xylylenediamine-based polyamide resin, other than m-xylylenediamine and p-xylylenediamine, include aliphatic diamines, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, p-phenylenediamine, and bis(aminomethyl)naphthalene. One of these can be used alone, or two or more can be mixed and used.

More preferably 75% by mole or more, still more preferably 80% by mole or more, even more preferably 90% by mole or more, even still more preferably 95% by mole or more, and yet even still more preferably 98% by mole or more of the dicarboxylic acid-derived structural unit of the xylylenediamine-based polyamide resin is derived from an α,ω-linear aliphatic dicarboxylic acid having from 4 to 20 carbon atoms.

Examples of the α,ω-linear aliphatic dicarboxylic acid having from 4 to 20 carbon atoms that is preferably used as the raw material dicarboxylic acid component of the xylylenediamine-based polyamide resin include aliphatic dicarboxylic acids, such as succinic acid, glutaric acid, pimelic acid, suberic acid, azelaic acid, adipic acid, sebacic acid, undecanedioic acid, and dodecanedioic acid. Among these, one type, or a mixture of two or more types may be used, but adipic acid and/or sebacic acid is more preferable, and adipic acid is more preferable because a melting point of the polyamide resin is in an appropriate range for molding.

Examples of the dicarboxylic acid component other than the α,ω-linear aliphatic dicarboxylic acid having from 4 to 20 carbon atoms include phthalic acid compounds, such as isophthalic acid, terephthalic acid, and orthophthalic acid; and naphthalenedicarboxylic acid isomers, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type, or a mixture of two or more types may be used. In particular, isophthalic acid is exemplified as the dicarboxylic acid component other than the α,ω-linear aliphatic dicarboxylic acid having 4 to 20 carbon atoms.

In the present embodiments, 70% by mole or more (more preferably 75% by mole or more, still more preferably 80% by mole or more, even still more preferably 90% by mole or more, yet even still more preferably 95% by mole or more, and yet even still more preferably 98% by mole or more) of the diamine-derived structural unit of the xylylenediamine-based polyamide resin is derived from m-xylylenediamine, and 70% by mole or more (more preferably 75% by mole or more, still more preferably 80% by mole or more, even still more preferably 90% by mole or more, yet even still more preferably 95% by mole or more, and yet even still more preferably 98% by mole or more) of the dicarboxylic acid-derived structural unit is particularly derived from adipic acid.

The xylylenediamine-based polyamide resin may be modified with isophthalic acid. For example, the case where 1 to 10% by mole of the structural unit derived from dicarboxylic acid is a structural unit derived from isophthalic acid is exemplified.

The xylylenediamine-based polyamide resin used in the present embodiments mainly includes a diamine-derived structural unit and a dicarboxylic acid-derived structural unit, but structural units other than these are not entirely excluded. Of course, the xylylenediamine-based polyamide resin may contain structural units derived from a lactam such as ε-caprolactam or laurolactam, or from an aliphatic aminocarboxylic acid such as aminocaproic acid or aminoundecanoic acid. Here, the term "main component" indicates that, of the structural units constituting the xylylenediamine-based polyamide resin, the total number of the diamine-derived structural units and the dicarboxylic acid-derived structural units is the largest among all the structural units. In the present embodiments, the total of the diamine-derived structural units and the dicarboxylic acid-derived structural units in the xylylenediamine-based polyamide resin preferably accounts for 90% by mass or more, more preferably 95% by mass or more, and may account for 98% by mass or more, of all the structural units.

As a method for producing the xylylenediamine-based polyamide resin, a known method can be employed. For example, reference can be made to the descriptions in paragraph [0041] to [0043] of WO 2017/057463, the contents of which are incorporated herein by reference.

The number average molecular weight of the polyamide resin (preferably xylylenediamine-based polyamide resin) used in the present embodiments is selected, as appropriate, according to the application and molding method of the multilayer container, but from the perspectives of moldability and strength of the multilayer container, the number average molecular weight is preferably from 10000 to 60000, and more preferably from 11000 to 50000.

Note that the number average molecular weight of the polyamide resin is calculated from the following equation (X). Number average molecular weight = 2 × 1000000/([COOH] + [NH2]) (Where [COOH] represents the terminal carboxyl group concentration (pmol/g) in the polyamide resin, and [NH₂] represents the terminal amino group concentration (µmol/g) in the polyamide resin.)

Here, the terminal carboxyl group concentration is a value that is calculated by neutralization titration of a solution of the polyamide in benzyl alcohol with an aqueous sodium hydroxide solution.

The content of the polyamide resin (preferably xylylenediamine-based polyamide resin) contained in the polyamide resin layer in the present embodiments is 10% by mass or more, preferably 30% by mass or more, more preferably 50% by mass or more, even more preferably 70% by mass or more, still even more preferably 80% by mass or more, yet still even more preferably 85% by mass or more, yet still even more preferably 89% by mass, and may be 90% by mass or more, based on the polyamide resin layer. When the value is set to the lower limit value or more, releasability from the polyester resin layer tends to improve and recycling becomes easier. The upper limit of the content of the polyamide resin is not particularly limited, but is, for example, 99.9% by mass or less. Alternatively, the upper limit of the content of the polyamide resin is an amount such that all the components other than the colorant and/or the light-shielding agent and the additive (for example, the oxygen absorbent) which is blended as necessary become the polyamide resin.

The polyamide resin layer may further contain a colorant and/or a light-shielding agent, a polyester resin, an oxygen absorber, other additives, and the like. Hereinafter, these components are described.

As described above, the polyamide resin layer in the present embodiments preferably contains at least one of a colorant and a light shielding agent in order to achieve the total light transmittance. Such a configuration can provide a multilayer container having high light-shielding properties. In addition, the multilayer container can be colored, and thus a multilayer container excellent in design can be obtained.

In the present embodiments, when a colorant and/or a light-shielding agent is blended into the polyamide resin layer having high gas barrier properties, it is possible to impart light-shielding properties to the obtained multilayer container without blending a colorant and/or a light-shielding agent into the polyester resin layer.

The colorant and the light-shielding agent are not clearly distinguished from each other, and a substance having both functions of the colorant and the light-shielding agent is also included. The colorant/light-shielding agent is typically a pigment, but may also be a dye.

Examples of the colorant and the light-shielding agent include colorants/light-shielding agents that are white, black, red, blue, yellow, green, brown, or a combination of two or more thereof. The colorant and the light-shielding agent are preferably a white pigment or a black pigment, more preferably at least one of titanium oxide and carbon black, and still more preferably titanium oxide.

The type of the white pigment is not particularly limited, and known white pigments can be used. Examples thereof include titanium oxide, barium sulfate, zinc oxide, zinc sulfide, and calcium carbonate. Among them, titanium oxide is preferable from the viewpoint of optical density.

The type of the black pigment is not particularly limited, and known black pigments can be used. Examples thereof include carbon black.

The number average particle diameter of the white pigment is not particularly limited, but the number average particle diameter is preferably in the range of from 0.1 to 0.5 um, and more preferably in the range of from 0.2 to 0.4 um. When the number average particle diameter is less than 0.1 um, the dispersibility of the white pigment in the polyamide resin layer may decrease. On the other hand, when the number average particle diameter is more than 0.5 µm, the polyamide resin layer may be easily broken during film formation and the productivity may decrease.

The method of blending the colorant and/or the light-shielding agent into the polyamide resin layer is not particularly limited, and the colorant and/or the light-shielding agent can be blended at any stage of the production process. Examples thereof include a method of adding a colorant and/or a light-shielding agent at the time of polymerization of a polyamide resin, a method in which a master batch obtained by kneading a colorant and/or a light-shielding agent into a resin at a high concentration is produced, and is added to a polyamide resin for dilution (master batch method), and a method in which a polyamide resin is melted and mixed with a colorant and/or a light-shielding agent in an extruder. In the present embodiments, from the viewpoint of easy adjustment to a desired concentration, a method in which the concentration of the colorant and/or the light-shielding agent is adjusted to a desired concentration before formation of the polyamide resin layer using the master batch method is preferable. The resin used in the master batch is preferably a polyamide resin. The resin used in the master batch is preferably a polyester resin.

The content of the colorant and/or light shielding agent is not particularly fixed as long as the polyamide resin layer can achieve the desired total light transmittance. For example, the content is preferably 1 part by mass or more, more preferably 3 parts by mass or more, still more preferably 5 parts by mass or more, even still more preferably 7 parts by mass or more, and yet even still more preferably 9 parts by mass or more in 100 parts by mass of the polyamide resin layer. When the value is set to the lower limit or more, the total light transmittance tends to be further decreased. Furthermore, the content of the colorant and/or light shielding agent is preferably 40 parts by mass or less, more preferably 35 parts by mass or less, still more preferably 30 parts by mass or less, even still more preferably 25 parts by mass or less, yet even still more preferably 20 parts by mass or less, in 100 parts by mass of the polyamide resin layer. With the content not being higher than the upper limit, moldability (blow moldability) tends to further improve.

The polyamide resin layer in the present embodiments may contain only one type of the colorant and/or light shielding agent or two or more types of the colorants and/or light shielding agents. When two or more kinds are contained, the total amount thereof is preferably in the above range.

The polyamide resin layer in the present embodiments may also contain a polyester resin. When the polyester resin is included, delamination of the multilayer container during market distribution can be effectively suppressed.

The details of the polyester resin are the same as those of the resin contained in the polyester resin layer described above, and the preferable range thereof is also the same. That is, polyethylene terephthalate is preferable.

When the polyamide resin layer in the present embodiments contains a polyester resin, the mass ratio between the polyamide resin and the polyester resin is preferably from less than 100:more than 0 to 10:90, more preferably from less than 100:more than 0 to 30:70, still more preferably from less than 100:more than 0 to 50:50, even still more preferably from less than 100:more than 0 to 70:30, yet still more preferably from less than 100:more than 0 to 80:20, and yet still more preferably from less than 100:more than 0 to 90:10. When the value is set to the above range, the oxygen barrier properties tend to be further improved.

The polyamide resin layer in the present embodiments may contain only one type or two or more types of the polyamide resins. When two or more kinds are contained, the total amount thereof is preferably in the above range.

The polyamide resin layer may contain an oxygen absorber. Inclusion of the oxygen absorber makes it possible to improve oxygen barrier properties.

Examples of the oxygen absorber include compounds containing a transition metal. The transition metal is preferably at least one selected from the group consisting of transition metals belonging to the Group VIII of the periodic table of elements, manganese, copper, and zinc, and from the viewpoint of more effectively expressing an oxygen absorption capacity, the transition metal element is more preferably at least one selected from the group consisting of cobalt, iron, manganese, and nickel, and is even more preferably cobalt.

The transition metal may be used alone, or may be used in the form of a low-valence oxide (monovalent to trivalent), an inorganic acid salt, an organic acid salt, or a complex salt, each containing the aforementioned metal. Examples of the inorganic acid salts include carbonates, sulfates, nitrates, phosphates, silicates, and halides such as chloride and bromide. Meanwhile, examples of the organic acid salt include carboxylates, sulfonates, and phosphonates. Further, a transition metal complex with β-diketone, β-keto acid ester or the like may also be used.

In the present embodiments, from the viewpoint of favorably expressing an oxygen absorbing capacity, it is preferable to use at least one type selected from the group consisting of carboxylates, carbonates, acetylacetonate complexes, oxides, and halides, which contain a transition metal. It is more preferable to use at least one type selected from the group consisting of octanoates, neodecanoates, naphthenates, stearates, acetates, carbonates, and acetylacetonate complexes. It is still more preferable to use cobalt carboxylates such as cobalt octanoate, cobalt naphthenate, cobalt acetate, and cobalt stearate. It is even still more preferable to use cobalt stearate.

In addition, the content of the oxygen absorber in the polyamide resin layer is preferably 0.0001 parts by mass or more, more preferably 0.001 parts by mass or more, still more preferably 0.03 parts by mass or more, and even still more preferably 0.005 parts by mass or more, relative to 100 parts by mass of the polyamide resin, in terms of the transition metal. When the proportion is set to the lower limit value or more, the oxygen barrier properties tend to be further improved. In addition, the content of the oxygen absorber is preferably 1.0 part by mass or less, more preferably 0.5 parts by mass or less, still more preferably 0.1 parts by mass or less, and even still more preferably 0.05 parts by mass or less, relative to 100 parts by mass of the polyamide resin, in terms of the transition metal. When the value is set to the above upper limit or less, molding processability and oxygen absorbing properties tend to further improve in a well-balanced manner. Note that, the term "in terms of the transition metal" means the content of a simple substance of a transition metal or a transition metal itself in a compound containing the transition metal. In particular, when the rate of the polyamide resin in the polyamide resin layer is 30% by mass or more (preferably 50% by mass), the oxygen barrier properties tend to be significantly improved.

The polyamide resin layer may contain only one type of oxygen absorber, or two or more types of oxygen absorbers. When two or more kinds are contained, the total amount thereof is preferably in the above range.

In the present embodiments, the polyamide resin layer may contain a component other than the above components. Examples of the other components include resins other than the polyamide resin and the polyester resin, thermal stabilizers, photostabilizers, moisture-proof agents, waterproofing agents, lubricants, and spreading agents.

In the present embodiments, in the polyamide resin layer, the total amount of the polyamide resin and the polyester resin is preferably more than 90% by mass, more preferably 95% by mass or more, and still more preferably 98% by mass or more of the polyamide resin layer.

In the present embodiments, in the polyamide resin layer, the total amount of the polyamide resin (preferably, the xylylenediamine based polyamide resin), the polyester resin, the colorant and/or the light shielding agent, and the oxygen absorber is preferably 96% by mass or more, and more preferably 99% by mass or more. Furthermore, the upper limit of the total amount is 100 mass%.

### <Applications>

The multilayer container of the present embodiments is used for various containers. In particular, the multilayer container of the present embodiments is preferably used as a multilayer container with recyclability. The multilayer container of the present embodiments may further have an outer layer film, a lid, or the like. Furthermore, the multilayer container of the present embodiments may be provided with an identification mark such as an indication that the multilayer container is a PET bottle or an indication that the multilayer container is a plastic container package.

That is, a container can be produced using the polyester resin collected from the multilayer container of the present embodiment. In particular, a method of collecting a polyester resin from the multilayer container of the present embodiments and producing a container by using the collected polyester resin, the container having a polyester resin layer, the polyester resin layer containing a polyester resin and having a total light transmittance of 80% or more, is exemplified. The container produced by the recycling may be a single-layer container of a polyester resin layer or a multi-layer container of a polyester resin layer and other resin layer. Examples of the other resin layer in the case of the multilayer container include a polyamide resin layer.

The container produced by the recycling can have a configuration in which the polyester resin layer does not contain a colorant and/or a light-shielding agent, and thus can be used as a polyester resin layer of a container having a total light transmittance of 80% or more, that is, a transparent container. The total light transmittance is preferably 90% or higher, and more preferably 95% or higher. The total light transmittance is a value measured in accordance with the Examples which will be described later.

The multilayer container of the present embodiments is preferably a hollow container, more preferably a liquid packaging container used by filling the inside of the hollow container with a liquid, and is even more preferably a beverage packaging container. Examples of the liquid to be filled in the inside may include various products, including beverages, such as water, carbonated water, oxygen water, hydrogen water, milk, dairy products, juices, coffee, coffee beverages, carbonated soft drinks, teas, and alcoholic beverages; liquid seasonings, such as sauces, soy sauce, syrup, sweet sake, and dressings; chemicals, such as agrochemicals and insecticides; pharmaceutical products; and detergents. Particularly preferable examples are beverages or carbonated beverages which easily deteriorate in the presence of oxygen, including for example, beer, wine, coffee, coffee beverages, fruit juices, carbonated soft drinks, carbonated water, and teas.

### <Method for Producing Multilayer Container>

The method for producing the multilayer container of the present embodiments is not particularly limited, and a known production method can be used. Specifically, reference can be made to the disclosures of paragraphs [0055] to [0058] of WO 2017/057463, the contents of which are incorporated herein by reference.

In particular, in the method for producing the multilayer container of the present embodiments, it is preferable that the multilayer preform obtained by the extrusion molding be subjected to direct-blow molding or that the multilayer preform obtained by the co-injection molding be subjected to stretch-blow molding, and it is more preferable that the multilayer preform obtained by the co-injection molding be subjected to biaxially stretch-blow molding. The conditions for biaxial stretch-blow molding preferably include a preform heating temperature of from 95 to 110°C, a primary blow pressure of from 0.5 to 1.2 MPa, and a secondary blow pressure of from 2.0 to 2.6 MPa. The occurrence of uneven thickness and uneven stretching is suppressed through biaxial stretch-blow molding under these conditions, and therefore a multilayer container having excellent strength can be produced.

### <Method for Producing Recycled Polyester Resin>

The method for producing recycled polyester resin of the present embodiments includes collecting a polyester resin from the multilayer container of the present embodiment.

The multilayer container of the present embodiments is excellent in recyclability as described above, and the recycled polyester resin can be easily produced by using the multilayer container of the present embodiments as a raw material. In the present embodiments, the method for producing the recycled polyester resin is not particularly limited as long as the polyester resin is collected from the multilayer container of the present embodiments to produce the recycled polyester resin. In the method for producing the recycled polyester resin of the present embodiments, the polyester resin is preferably collected by removing all or a part of the polyamide resin layer from the multilayer container of the present embodiment.

Details of the method for producing the recycled polyester resin of the present embodiments will be described below.

In the present production method, a used multilayer container is ordinarily used as the multilayer container, but an unused multilayer container may also be used. Examples of the used multilayer container include those that have been distributed in the market and then collected.

In the method for producing the recycled polyester resin of the present embodiments, first, when a lid is attached to the multilayer container, the lid is removed from the multilayer container, and then all or a part of the polyamide resin layer is removed (hereinafter referred to as a removal step), which is preferable. When the lid has already been removed from the multilayer container, the removal step is preferably performed on the multilayer container from which the lid has been removed.

The removal step is not particularly limited as long as the polyamide resin layer can be removed and the polyester resin can be selectively taken out. For example, the removal of the polyamide resin layer is preferably performed by pulverizing the multilayer container and then performing air elutriation. The multilayer container can be ground using a grinder such as a single-screw grinder, a twin-screw grinder, a three-screw grinder, or a cutter mill. The ground product obtained by grinding is formed into, for example, a flake shape, a powdered shape, or a bulk shape. However, a large portion of the multilayer container has a thin multilayer laminated structure with a thickness of several millimeters or less, such as the trunk section, and therefore most of the ground product is ordinarily flake-shaped. Note that the flake-shaped ground product refers to a flaky or flat shaped product having a thickness of approximately 2 mm or less.

Additionally, in the multilayer container of the present embodiments, the polyester resin layer and the polyamide resin layer are structurally integrated, but these layers do not usually adhere to each other, and in the grinding step, the polyester resin layer and the polyamide resin layer are easily separated as separate ground products. In addition, by forming the ground product in flake shapes, the ground product is more likely to be blown up and separated by the air flow of the air elutriation described below. However, the polyester resin layer and the polyamide resin layer are not necessarily materials that can be completely separated in the grinding step, and the ground product is separated into a ground product having a relatively high content percentage of the polyester resin and a ground product having a relatively low content percentage of the polyester resin and a relatively high content percentage of the polyamide resin. Note that in the following, for convenience of explanation, the ground product having a relatively high content percentage of polyester resin may be referred to simply as polyester resin, and the ground product having a relatively high content percentage of polyamide resin may be referred to simply as polyamide resin.

As described above, the ground product that has been ground is separated into polyester resins and polyamide resins (separation step). As the separation method, specific gravity sorting using the difference in the specific gravities of the polyester resins and the polyamide resins is preferably used.

A specific example of specific gravity sorting is air elutriation in which the ground product is sorted through wind force. The air elutriation is a method in which, in a separation device that can internally generate a rotating airflow, the ground products, which have been subjected to the airflow generated by the separation device, are separated into: ground products that have high large specific gravity or bulk density and descend naturally due to the weight of the ground products itself; and ground products that have small specific gravity or bulk density and are blown upward by the airflow.

With this method, the ground product of polyester resin naturally descends under its own weight, whereas the ground product of the polyamide resin is blown upward, and through this, the polyester resin and polyamide resin can be separated and collected.

In this type of air elutriation, a similar operation may be repeated for the same ground product. For example, the naturally descended ground product may be once again subjected to air elutriation to increase the content percentage of polyester resin in the recycled polyester resin.

Note that the separation method is not limited to air elutriation, and other examples include a method of immersing the ground product in a liquid such as water and separating by differences in specific gravity of the ground product with respect to the liquid, and a method of applying a constant level of vibration to the ground product and separating ground products of different specific gravities.

In the method for producing recycled polyester resin of the present embodiments, the collected polyester resin (recycled polyester resin) is preferably granulated into pellets in order to facilitate handling during molding and processing. The granulation may be implemented before or after the below-described crystallization/solid phase polymerization step, but it is preferable to implement granulation before the crystallization/solid phase polymerization step. When granulation is implemented before the crystallization/solid phase polymerization step, handling ease in the crystallization/solid phase polymerization step is favorable.

For the granulation, reference can be made to the descriptions in paragraph [0072] of WO 2017/057463, the contents of which are incorporated herein by reference.

In the method for producing the recycled polyester resin of the present embodiments, the collected polyester resin is preferably subjected to at least one of crystallization and solid-phase polymerization. In the present embodiments, it is more preferable to perform both crystallization and solid-phase polymerization. The crystallization and/or solid phase polymerization is preferably implemented on the pelletized polyester resin described above, but may be implemented on a non-pelletized polyester resin (for example, the ground product). Note that when crystallization and solid phase polymerization are both implemented, the recycled polyester resin is preferably crystallized and then subjected to solid phase polymerization.

For the details of the crystallization/solid phase polymerization of the recycled polyester resin, reference can be made to the descriptions in paragraphs [0073] to [0076] of WO 2017/057463, the contents of which are incorporated herein by reference.

In the method for producing the recycled polyester resin of the present embodiments, a step other than the steps described above may be implemented, and washing the multilayer container may be implemented to remove contents adhering to the interior of the multilayer container. When the multilayer container is washed, the multilayer container may be dried after the washing.

For the washing and drying the multilayer container, reference can be made to the disclosure of paragraph [0077] of WO 2017/057463, the contents of which are incorporated herein by reference.

In the method for producing the recycled polyester resin of the present embodiments, the content of the polyamide resin is preferably less than 1% by mass, more preferably less than 0.8% by mass, and still more preferably less than 0.6% by mass in the obtained recycled polyester resin. As described above, when the content of the polyamide resin is reduced, it is possible to prevent the color tone from becoming poor due to the polyamide resin, and it becomes easier to improve the quality of the recycled polyester resin.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### Raw material

### <Polyester Resin>

PET: Isophthalic acid copolymerized polyethylene terephthalate, intrinsic viscosity: 0.83 dL/g, melting point: 248°C, trade name: BK2180, available from Mitsubishi Chemical Corporation

### <Polyamide Resin>

MXD6 : Polyamide resin obtained in the following Production

### Example 1

### <<Production Example 1»

A reaction container having an internal volume of 50 liters and equipped with a stirrer, a partial condenser, a total condenser, a thermometer, a dropping funnel, a nitrogen introduction tube, and a strand die was filled with precisely weighed materials including 15000 g (102.6 mol) of adipic acid, 13.06 g (123.3 mmol, 151 ppm as a phosphorus atom concentration in the polyamide) of sodium hypophosphite monohydrate (NaH₂PO₂· H₂O), and 6.849 g (83.49 mmol, 0.68 as a ratio of the number of moles with respect to the sodium hypophosphite monohydrate) of sodium acetate, and then sufficiently subjected to nitrogen purging, after which the contents of the system were heated to 170°C while stirring under a small nitrogen stream. Next, 13896 g (102.0 mol, 0.994 as a charged molar ratio) of meta-xylylenediamine was added dropwise under stirring, and the temperature inside the system was continuously increased while removing condensed water that was produced to outside of the system. After the completion of dropwise addition of the meta-xylylenediamine, the reaction was continued for 40 minutes at an internal temperature of 260°C. Subsequently, the inside of the system was pressurized with nitrogen, and the obtained polymer was removed from the strand die and pelletized to obtain approximately 24 kg of polyamide.

Next, the polyamide was inserted into a jacketed tumble dryer provided with a nitrogen gas introduction tube, a vacuum line, a vacuum pump, and a thermocouple for measuring the internal temperature, and the inside of the tumble dryer was sufficiently purged with nitrogen gas having a purity of 99 vol% or higher while the tumble dryer was rotated at a constant speed, after which the tumbler dryer was heated under the same nitrogen gas stream, and the pellet temperature was increased to 150°C over approximately 150 minutes. When the pellet temperature reached 150°C, the pressure inside the system was reduced to 1 torr or less. Heating was further continued, and after the pellet temperature was increased to 200°C over approximately 70 minutes, the temperature was maintained at 200°C for 30 to 45 minutes. Next, nitrogen gas having a purity of 99 vol% or higher was introduced into the system, and the tumble dryer was cooled while being rotated, and a polyamide resin (MXD6) was obtained. The terminal amino group concentration was measured, and was found to be 14.4 µmol/g.

### <Colorant/Light-shielding agent>

HOLCOMER UHT, available from Holland Colours, white pigment (titanium oxide) was made into a master batch with a polyester resin.

### <Oxygen Absorber>

Cobalt(II) stearate

### Example 1

### Preparation of polyamide resin composition

Polyamide resins (MXD6), a masterbatch (HOLCOMER UHT, available from Holland Colours, Ltd.) made by a polyester resin using a white pigment (titanium oxide) as a colorant/light-shielding agent, and cobalt stearate as an oxygen absorber agent were melt-kneaded at 260°C using a twin-screw extruder (TEM26SX, available from Shibaura Machinery Co., Ltd.) to obtain polyamide resin composition pellets. Subsequently, the polyamide resin composition pellets were dried in a vacuum dryer at 150°C for 5 hours.

In Table 1, "absent" means that the component was not blended, and "present" means that the component was blended.

In the polyamide resin composition pellets, the master batch was blended so as to have a desired total light transmittance. The amount of the master batch was generally about 10% by mass of the polyamide resin composition. In addition, in the polyamide resin composition pellets, cobalt stearate was blended so as to be 200 ppm by mass with respect to the polyamide resin composition on a cobalt atom basis. The remaining component was the polyamide resin (MXD6).

### <Preform Molding>

An injection molding machine (model SE130DU-CI, available from Sumitomo Heavy Industries, Ltd.) having two injection cylinders, and a two-piece mold (available from Kortec, Inc.) were used, and the polyester resin was injected from one injection cylinder, the polyamide resin composition was injected from the other injection cylinder, and under the conditions presented below, a three-layer preform (25 g equivalent setting per preform) formed from a polyester resin layer/polyamide resin layer/polyester resin layer was subjected to injection molding and was produced such that the mass of the polyamide resin layer was 10% by mass relative to the entire preform. The shape of the preform included an overall length of 95 mm, an outer diameter of 22 mm, and a wall thickness of 4.0 mm. The molding conditions for the three-layer preform were as presented below.
Skin-side injection cylinder temperature: 285°C
Core-side injection cylinder temperature (only for three-layer preform): 265°C
Resin flow path temperature in the mold: 285°C
Mold cooling water temperature: 15°C
Cycle time: 40 seconds

### <Bottle Molding>

The preform obtained above was biaxially stretched and blow molded using a blow molding device (EFB1000ET, available from Frontier Inc.), and a bottle (hollow multilayer container) was obtained. The overall length of each bottle was 223 mm, the outer diameter was 65 mm, and the internal volume was 500 mL, the thicknesses of the polyester resin layer/polyamide resin layer/polyester resin layer are 140 µm/70 µm/140 um, respectively, and the bottom part was petaloid shaped. No dimples were provided in the trunk section. The biaxial stretching and blow molding conditions are as shown below.

| | |
|---|---|
| Preform heating temperature: | 103°C |
| Stretching rod pressure: | 0.7 MPa |
| Primary blow pressure: | 1.1 MPa |
| Secondary blow pressure: | 2.5 MPa |
| Primary blow delay time: | 0.30 seconds |
| Primary blow time: | 0.30 seconds |
| Secondary blow time: | 2.0 seconds |
| Blow exhaust time: | 0.6 seconds |
| Mold temperature: | 30°C |

### <Total light transmittance>

The total light transmittance of the obtained bottle, the total light transmittance of the polyamide resin layer separated from the obtained bottle, and the total light transmittance of the polyester resin layer separated from the obtained bottle were measured as follows.

The measurement sample was cut into a 5 cm square, and the total light transmittance was measured in a range of wavelengths from 300 to 800 nm by an integrating sphere measurement method using a spectrophotometer.

As a spectrophotometer, UV-3100 available from Shimadzu Corporation was used.

### <Recyclability (Easy Peelability)>

The obtained bottle (10 kg) was pulverized to make a flake-shaped pulverized product. After the pulverized product was washed with warm water at 85°C and stirred for 15 minutes, it was allowed to stand for 5 minutes, and then the pulverized product immersed in water was collected. The collected pulverized product was dried with hot air at 60°C for 2 hours, and then subjected to air elutriation in accordance with the description in WO 2017/057463 to collect a material having large thicknesses and specific gravities that fell on a lower receiver. Fifty flakes were taken out at random from the collected flakes, and the number of colored barrier layers was visually counted. A small number of colored barrier layers indicates that the polyester resin layer and the polyamide resin layer are easily peeled off from each other when the bottle is crushed, and thus the colored barrier layer (polyamide resin layer) is removed by subsequent air elutriation.
A: 1 or less colored barrier layer out of 50 collected flakes
B: 2 or more and 4 or less colored barrier layers out of 50 collected flakes
C: 5 or more and 10 or less colored barrier layers out of 50 collected flakes
D: 11 or more colored barrier layers out of 50 collected flakes

### <Moldability (blow properties) >

The obtained bottles were visually observed and evaluated as follows. Five experts conducted the evaluation, and the result was determined based on a majority vote.
A: There was no uneven thickness or rupture of the bottle, there was no appearance defect such as whitening, and a bottle as designed was obtained.
B: Other than the above A, for example, uneven thickness or rupture of the bottle or poor appearance such as whitening occurred, and a bottle as designed was not obtained.

### <Suppression of mold fouling (surface floating of colorant)>

After 500 shots of the molten resin were injected into the preform mold in the above <Bottle Molding> section, the state of the mold surface was visually evaluated. Five experts conducted the evaluation, and the result was determined based on a majority vote.
A: No change was observed from before molding.
B: Other than the above A, for example, deposits such as cloudiness on the mold surface were observed as compared with before molding.

### <Oxygen Barrier Property>

The bottles produced in the Examples and Comparative Examples were each filled with 100 mL of water, and under conditions of an oxygen partial pressure of 0.21 atm, a bottle internal humidity of 100% RH (relative humidity), an external humidity of 50% RH, and a temperature of 23°C, nitrogen at 1 atm was circulated inside the bottle at 20 mL/min, and the amount of oxygen included in the nitrogen after circulating inside the bottle for 200 hours was detected using a coulometric sensor, and thereby the oxygen permeability was measured.

For the measurement of oxygen permeability, an oxygen permeability measuring device (product name "OX-TRAN 2/61", available from MOCON Inc.) was used.
A: 0.008 cc/(bottle·day·0.21 atm) or less
B: Greater than 0.008 cc/(bottle-day-0.21 atm) and less than or equal to 0.040 cc/(bottle·day·0.21 atm)
C: Greater than 0.040 cc/(bottle-day-0.21 atm)

### Examples 2 and 3, and Comparative Example 1

In Example 1, the polyamide resin blended in the polyamide resin layer was changed as presented in Table 1 in terms of the kind of the resin and the blend ratio thereof, and the other conditions were the same as in Example 1. In Table 1, PET/MXD6 = 40/60 and PET/MXD6 = 80/20 represent the mass ratios of the respective resins. In Examples 2 and 3, the injection molding temperature of the polyamide resin layer was set to 280°C. Evaluation was performed in the same manner as in Example 1.

**[Table 1]**

| | | | Example 1 | Example 2 | Example 3 | Comparative Example 1 |
|---|---|---|---|---|---|---|
| Composition | Polyester resin | Composition | PET | PET | PET | PET |
| | | Colorant/light-shielding agent | Absent | Absent | Absent | Absent |
| | | Total light transmittance (%) | 90 | 90 | 90 | 90 |
| | Polyamide resin layer | Composition | MXD6 | PET/MXD6 =40160 | PET/MXD6 =80/20 | PET |
| | | Colorant/light-shielding agent | A white pigment (titanium oxide) is made into a master batch with a polyester resin. | | | |
| | | Colorant/light-shielding agent | Present | Present | Present | Present |
| | | Oxygen absorber | Present | Present | Present | Present |
| | | Total light transmittance (%) | 14 | 15 | 15 | 15 |
| Evaluation item | Total light transmittance of bottle (%) | | 12 | 13 | 14 | 15 |
| | Recyclability (easy peelability) | | A | B | C | D |
| | Moldability (blow properties) | | A | A | B | A |
| | Suppression of mold fouling (surface floating of colorant) | | A | A | A | A |
| | Oxygen Barrier Property of the Bottle | | A | A | B | C |

As is clear from the results described above, the multilayer container of the present invention had a low total light transmittance and an excellent light shielding property. Also, recyclability was excellent. Furthermore, the multilayer container of the present invention was excellent in moldability and was able to suppress mold contamination.

### Reference Signs List

- 10: Multilayer container
- 11: Polyester resin (inner layer)
- 12: Polyamide resin layer (gas barrier layer)
- 13: Polyester resin (outer layer)

## Claims

1. A multilayer container comprising a polyester resin layer and a polyamide resin layer, wherein the polyester resin layer comprises a polyester resin and has a total light transmittance of 80% or more, and the polyamide resin layer comprises a polyamide resin in a proportion of 10% by mass or more of the polyamide resin layer and has a total light transmittance of less than 80%.

2. The multilayer container according to claim 1, wherein the polyamide resin layer comprises at least one of a colorant and a light-shielding agent.

3. The multilayer container according to claim 2, wherein the at least one of a colorant and a light-shielding agent is at least one of titanium oxide and carbon black.

4. The multilayer container according to any one of claims 1 to 3, wherein the polyamide resin comprises a diamine-derived structural unit and a dicarboxylic acid-derived structural unit, 70% by mole or more of the diamine-derived structural unit being a structural unit derived from xylylenediamine, and 70% by mole or more of the dicarboxylic acid-derived structural unit being a structural unit derived from an α,ω-linear aliphatic dicarboxylic acid having from 4 to 20 carbons.

5. The multilayer container according to any one of claims 1 to 4, wherein the polyamide resin layer comprises a polyamide resin in a proportion of 50% by mass or more of the polyamide resin layer.

6. The multilayer container according to any one of claims 1 to 5, wherein a total light transmittance of the polyamide resin layer is 70% or less.

7. The multilayer container according to any one of claims 1 to 6, wherein the multilayer container has an oxygen transmission rate of 0.040 cc/(bottle·day·0.21 atm) or less.

8. The multilayer container according to any one of claims 1 to 7, wherein a total light transmittance of the polyester resin layer is 90% or more.

9. The multilayer container according to any one of claims 1 to 8, wherein the polyamide resin layer comprises an oxygen absorber.

10. The multilayer container according to any one of claims 1 to 9, wherein the multilayer container has a recycling property.

11. A method for producing a container, the method comprising collecting a polyester resin from the multilayer container according to any one of claims 1 to 10, and producing a container by using the collected polyester resin, the container comprising a polyester resin layer, the polyester resin layer comprising a polyester resin and having a total light transmittance of 80% or more.

12. A method for producing a recycled polyester resin, the method including collecting a polyester resin from the multilayer container according to any one of claims 1 to 10.

13. The method for producing a recycled polyester resin according to claim 12, wherein the method comprises removing all or a part of the polyamide resin layer from the multilayer container and collecting the polyester resin.

14. The method for producing a recycled polyester resin according to claim 13, wherein the polyamide resin layer is removed by air elutriation after the multilayer container has been ground.

15. The method for producing a recycled polyester resin according to any one of claims 12 to 14, wherein the collected polyester resin is subjected to at least one of crystallization and solid-phase polymerization.
